# EUROPEAN PATENT APPLICATION

(11) **EP 3 139 037 A1**
(43) Date of publication of application: **08.03.2017**
(21) Application number: 15183557.6
(22) Date of filing: 02.09.2015
(51) Int. Cl.: F03D 13/20

(54) **TOWER FOR A WIND TURBINE WITH BUTTRESSES**

(71) Applicant: Siemens Aktiengesellschaft, 80333 München (DE)
(72) Inventor: Stiesdal, Henrik, 5000 Odense C (DK)

(57) **Abstract**

The invention relates to a tower (20) for a wind turbine (10), the tower (20) comprising a plurality of tower segments (21) including a first tower segment (211) and at least a second tower segment (212), a plurality of buttresses (22), and an attachment piece (23). The tower segments (21) are arranged one upon the other from the base (25) of the tower (20) to the top (26) of the tower (20). The attachment piece (23) is arranged between the first tower segment (211) and the second tower segment (212), and the buttresses (22) are attached to the attachment piece (23), such that loads which are acting on the tower segments (21) are partially carried by the buttresses (22). The invention also relates to a wind turbine (10) comprising such a tower (20).

## Description

The invention relates to the problem of building competitive tall towers for wind turbines.

Modern, large wind turbines are normally installed on tubular towers made of steel and/or concrete. Other types of towers, such as lattice towers, three-leg towers and guyed towers have been used on smaller wind turbines, but they tend to become technically unattractive for large wind turbines needing very tall towers.

Classical tubular steel towers become prohibitively expensive for very tall towers. The main reason for this is that the bottom diameter is limited due to transportation. When the bottom diameter is limited, the wall thickness necessarily becomes excessive.

The problem has been partially solved by the introduction of bolted segment steel towers. With bolted tower sections assembled from shells the bottom diameter can be made as large as necessary. The downside is that bolted segment steel towers tend to require a very large number of bolts (typically more than 10.000) and elaborate site assembly arrangements.

Other solutions rely on concrete structures, either complete or as hybrid arrangements, with the lower part of the tower made of pre-cast concrete elements and with the upper part made of steel. Concrete towers tend to be costly, however, particularly if the transportation distance from the element factory to the site is long.

Cylindrical towers supported by guy wires represent a possible solution to the above problems.

With a uniform, cylindrical arrangement the tower sections can be made with the same internal arrangements, offering rationalization savings, and, due to the guy wire support halfway up, the tower itself can be made much lighter than any other solution.

The main drawback of guyed towers is the guy wire footprint. In order to obtain adequate stiffness and manageable wire dimensions the angle of the guy wire to horizontal should preferably be 45 degrees. For a 150 m (meter) tower with a 90 m height guy wire attachment this basically means a footprint of 90 m radius. The land use associated with this footprint will in most cases lead to the rejection of this solution.

Thus, there is the desire to provide a concept of a competitive, tall tower for a wind turbine which overcomes the mentioned drawbacks.

This objective is solved by the subject-matter of the independent claims. Advantageous embodiments and modifications are described in the dependent claims.

According to the invention there is provided a tower for a wind turbine, the tower comprising: a plurality of tower segments including a first tower segment and at least a second tower segment; a plurality of buttresses; and an attachment piece. The tower segments are arranged one upon the other from the base of the tower to the top of the tower. The attachment piece is arranged between the first tower segment and the second tower segment. Furthermore, the buttresses are attached to the attachment piece, such that loads which are acting on the tower segments are partially carried by the buttresses.

Compared with a guyed tower a tower with buttresses can have a much smaller footprint. There are two reasons for this: Firstly, the buttresses will carry load in both tension and compression, effectively halving the cross-section required to obtain a specific stiffness. Secondly, the buttresses are much cheaper than wires per cross section area. As a consequence, it is possible to obtain adequate stiffness with an angle of the buttress to horizontal that is much steeper than what is possible with guy wires, and this leads to a much reduced footprint. For a 150 m tower with a 90 m height buttress attachment the typical footprint will have 20 m radius. The land use associated with this footprint is not much larger than the land use for the crane pad which is needed anyway for erecting the tower.

Advantageously, the buttress is attached to the attachment piece via a mounting flange. A preferred material for the buttresses is steel, in particular spiral welded steel, which is one of the lowest cost of steel pipes available. In other words, one of the advantages of spiral welded steel is its low price, which is important due to the amount which is needed for the buttresses.

Regarding the material of the tower segments, at least some of the tower segments may exemplarily be made of steel.

The transfer of loads from the tubular part of the tower to the buttresses represents a challenge. The structural loads are highly dynamic and fatigue is the main design driver. Due to the large reduction associated with welding, a welded arrangement for the attachment of the buttresses will require very large wall thicknesses. As a result it will become very heavy. It is possible to make the attachment in a short, special section of the tower, thereby keeping the weight manageable, but it remains a problem that the mating surfaces for the tower sections and the buttresses will most likely need to be machined due to distortions caused by the large heat input of the welding. Machining a part of the likely weight resulting from a welded structure will require very specialized machinery.

This problem with the attachment can be solved with a cast member inserted into the tower. A cast iron structure will have much better fatigue properties than a welded structure, and as a result it can be made with lower weight. Thus, advantageously, the attachment piece is made of cast iron.

The dimensions of real-life towers remain an issue, however, with a typical diameter of 4 m. This means substantial costs for casting and machining.

This problem can be solved by making the attachment section in a number of segments. In particular, these segments may each have an identical shape and each having the mounting flange for one or more buttresses. The segments are much easier to cast than a single piece and can be machined individually and only assembled on site.

The tower concept for wind turbines has amongst other the following advantages:

The buttress tower can basically be as tall as it is necessary. At very large heights, e.g. taller than 150 m, it may be necessary to have one or more levels of bracings between the buttresses and/or the tower segments, but since the only purpose of such bracings will be to maintain stability, i.e. they can be arranged so as to not transfer loads, they can be made very lightweight.

The buttress tower can be made in a number of sections having identical dimensions, except for the wall thickness which should be adjusted for the loads particular to the relevant height. In other words, the outer diameters of the tower segments may be substantially equal along the whole extension of the tower from the base of the tower until the top of the tower. Regarding the thickness of the walls of the tower segments, they may advantageously decrease from the base until the top.

The identical dimensions allow for a high degree of standardization of the tower internals and for overall benefits from economics of scale.

In a specific embodiment of the invention, the number of attachment piece segments equals the number of buttresses, and one buttress is attached to each attachment piece segment.

The critical part of the tower, which is the connection section joining the buttresses to the cylindrical part of the tower, can be made as a segmented unit, facilitating low-cost manufacturing and transportation.

The tower segments may exemplarily have the shape of a circular cylinder. They may also be slightly tapered towards the tip of the tower, thus the shape of the tower segments may be described by a truncated cone, i.e. a frustum of a cone.

In a specific embodiment of the invention, the tower comprises a bracing such that the load carrying capability of the buttresses and the stability of the entire tower is further increased.

The bracing may be arranged between two adjacent buttresses. Alternatively or additionally, the bracing may be arranged between a buttress and a tower segment.

Advantageously, the invention is applied to tall towers for a wind turbine, i.e. to towers wherein the entire height after erection as measured from the base of the tower until the top of the tower exceeds fifty meters, in particular exceeds seventy-five meters, even more particularly exceeds one hundred meters.

The attachment piece is located at a height between twenty per cent and eighty per cent of the entire height of the tower, in particular between thirty per cent and seventy per cent of the entire height of the tower.

Finally, the invention is also directed towards a wind turbine for generating electricity comprising a tower as described above.

Embodiments of the invention are now described, by way of example only, with reference to the accompanying drawings, of which:
- Figure 1: shows a wind turbine with a tower with buttresses;
- Figure 2: shows the attachment piece with three buttresses attached to it;
- Figure 3: is a close-up of the attachment piece of Figure 2;
- Figure 4: shows the close-up of Figure 3, wherein two of the three attachment piece segments have been omitted;
- Figure 5: shows another close-up of Figure 3 with two omitted attachment piece segments; and
- Figure 6: shows an attachment piece segment in a perspective view.

The illustration in the drawings is in schematic form. It is noted that in different figures, similar or identical elements are provided with the same reference signs.

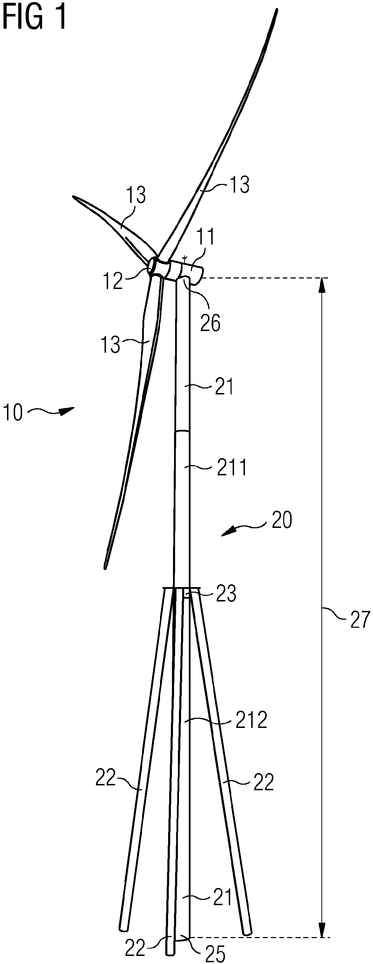

Figure 1 shows a wind turbine 10 for generating electricity. The wind turbine 10 comprises a nacelle 11 and a hub 12. The hub 12 is mounted rotatable about a rotor axis of rotation relative to the nacelle 11. Three rotor blades 13 are mounted on the hub 12. Each rotor blade 13 is rotatable about its longitudinal axis, which is referred to as the pitch axis. Preferably, the rotor blades may be rotated, i.e. pitched, independently from each other.

The nacelle 11 is mounted at the top 26 of a tower 20. In particular, the nacelle 11 is mounted rotatable with regard to the tower 20 by means of a yaw bearing. The axis of rotation of the nacelle 11 with regard to the tower 20 is referred to as the yaw axis.

In the particular example illustrated in Figure 1, the tower 20 is comprised by four tower segments 21 and one so called attachment piece 23. The tower segment 21 on top of the attachment piece 23 is referred to as the first tower segment 211; the tower segment 21 below the attachment piece 23 is referred to as the second tower segment 212. The first tower segment 211, the second tower segment 212 and the tower segment at the base 25 of the tower 20 each comprises a cylindrical shape. This means that at least its outer diameter remains constant along the entire longitudinal extension. Only the tower segment at the top 26 of the tower 20 is slightly tapered towards the top 26. The shape of the tower segment at the top 26 of the tower 20 may thus be described as a truncated cone.

An advantage of a tower with a substantially cylindrical cross section (except the upper most tower segment which is slightly tapered towards the top 26 of the tower 20) is that the cross section of the tower, i.e. its diameter, does not widen at the base 25 of the tower 20. This is advantageous because at least for on-shore wind turbines, road transport of tower segments imposes severe limitations on the maximum diameter of the tower segment.

The entire height 27 of the tower 20 is defined as the extension of the tower 20 from its base 25 to its top 26. In the example of Figure 1, the attachment piece 23 is located approximately at fifty per cent of the entire height 27 of the tower 20. Also note that in the exemplary embodiment of Figure 1, the tower 20 comprises four tower segments 21, wherein each tower segment 21 has approximately the same longitudinal extension.

Three similar buttresses 22 are mounted on the attachment piece 23. The three buttresses 22 are similar in size and shape. They are mounted in equal distance to each other. In particular, an angle of 120 degrees exists between two adjacent buttresses.

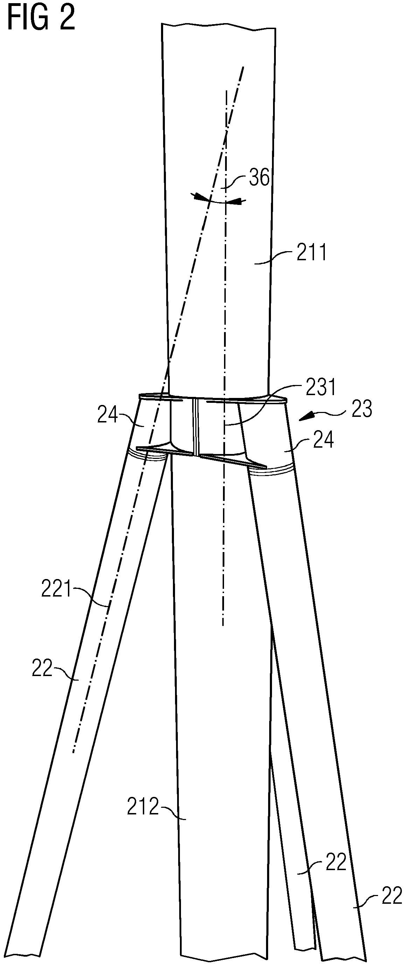

Figure 2 shows the attachment piece 23 with the three buttresses 22 mounted to it in more detail. It can be discerned that the attachment piece 23 does not consist of one single piece, but that it is segmented in several, in particular three, attachment piece segments 24. The segmentation of the attachment piece has the advantage of both easier manufacturing and easier transportation from the manufacturing hall to the installation site of the wind turbine. The first tower segment 211, the second tower segment 212 and the attachment piece 23 each have a cylindrical shape. This implies that a longitudinal axis, which coincides with the rotational axis of symmetry, can be attributed to each part. The longitudinal axis of the attachment piece is referred to by the reference sign 231 in Figure 2.

Likewise, also a longitudinal axis can be attributed to the buttresses 22. In Figure 2, for one buttress, its longitudinal axis 221 is drawn in. It can be seen that, in the example of Figure 2, the angle 36 between the longitudinal axis 231 of the attachment piece 23 and the longitudinal axis 221 of the buttress 22 is twenty-five degrees. Such a steep angle is advantageous as it minimizes the area which is needed at the base of the tower. Such a steep angle can be realized with buttresses - in contrary to conventional guy wires - because buttresses are able to carry the load in both tension and compression, thus effectively reducing the footprint of the wind turbine.

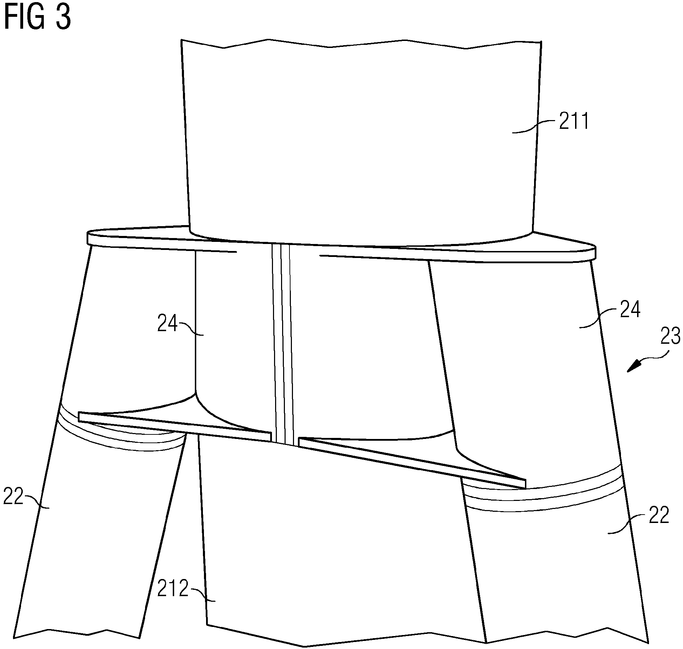

Figure 3 is a close-up of the attachment piece 23 shown in Figure 2. The mounting of the buttresses 22 to the single attachment piece segments 24 and the robust configuration of the attachment piece segments 24 itself can be discerned.

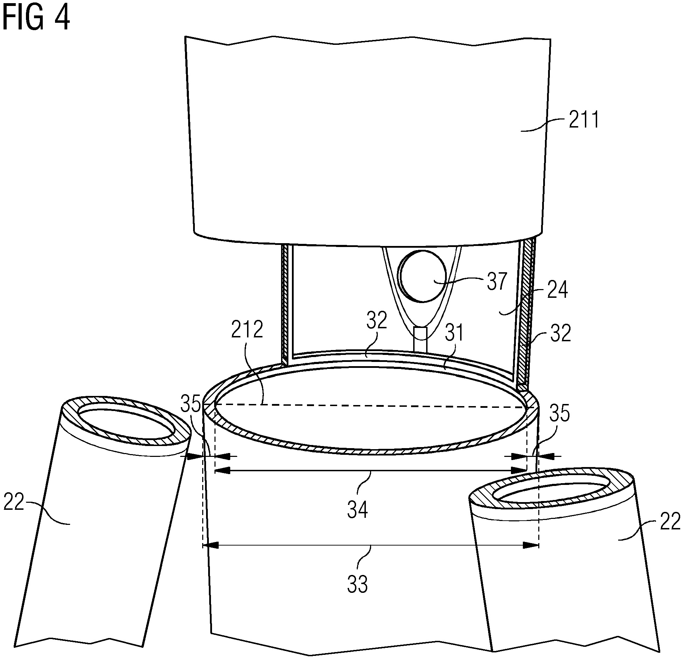

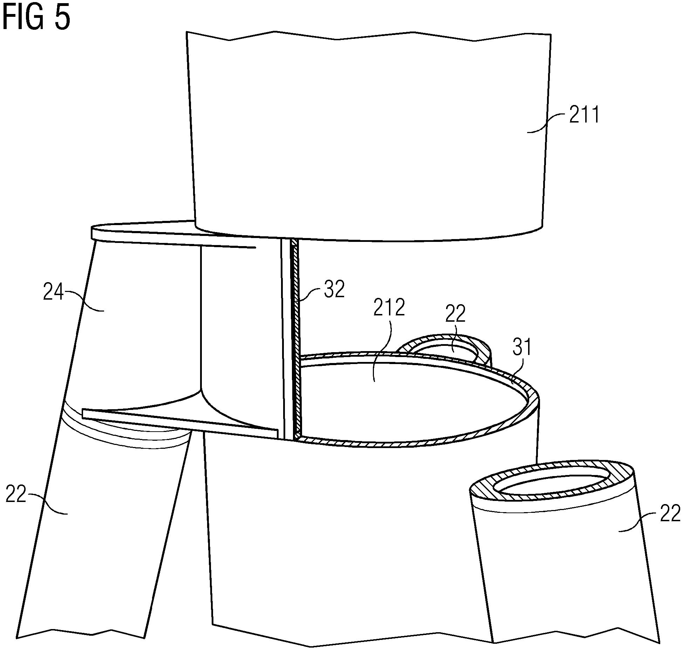

Figures 4 and 5 show the same close-up as Figure 3, but two of three attachment piece segments 24 have been removed in order to visualize aspects of the attachment piece 23 which otherwise would not have been visible.

The mounting flange 31 of the second tower segment 212 for connecting the attachment piece segments 24 with the second tower segment 212 is visible. Likewise, the first tower segment 211 comprises a similar mounting flange (not shown) for connecting the attachment piece segments 24 with the first tower segment 211.

Additionally, the mounting flange 32 of the attachment piece segment 24 is visible, which serves the purpose of providing the means of connecting adjacent attachment piece segments with each other.

Figure 4 also shows the outer diameter 33 and the inner diamter 34 of a tower segment. Knowing both values, the thickness 35 of the wall of a specific tower segment at a specific position can be determined. Note that, strictly speaking, the thickness as measured at the very top of the second tower segment 212, as illustrated in Figure 4, gives the value of the wall of the second tower segment 212 plus the extension of the mounting flange 31 perpendicular to the longitudinal axis of the second tower segment 212.

Finally, Figure 4 illustrates the manhole 37 of the attachment piece segment 24. The manhole 37 serves as an access from the attachment piece segment 24 to the buttress 22. The provision of such an access is important for both initial mounting of the tower and subsequent servicing, if necessary. In particular, the manhole is useful for tightening of any bolts which are used for joining the attachment piece segment 24 with the buttress 22.

Figure 5 is similar to Figure 4, just showing another attachment piece segment 24 left in place.

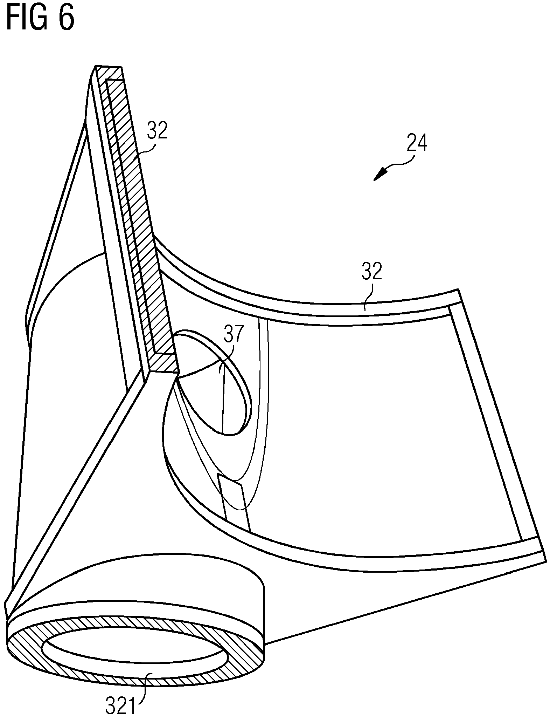

Figure 6 shows an isolated attachment piece segment 24 made from cast steel. The manhole 37 is visible, as well as the flanges 32 for connecting the attachment piece segment 24 with an adjacent other attachment piece segment or with a tower segment. Furthermore, a mounting flange 321 for mounting the attachment piece segment 24 to a buttress is visible.

Although the present invention has been described in detail with reference to the preferred embodiment, it is to be understood that the present invention is not limited by the disclosed examples, and that numerous additional modifications and variations could be made thereto by a person skilled in the art without departing from the scope of the invention.

It should be noted that the use of "a" or "an" throughout this application does not exclude a plurality, and "comprising" does not exclude other steps or elements. Also elements described in association with different embodiments may be combined. It should also be noted that reference signs in the claims should not be construed as limiting the scope of the claims.

## Claims

1. Tower (20) for a wind turbine (10), the tower (20) comprising a plurality of tower segments (21) including a first tower segment (211) and at least a second tower segment (212), a plurality of buttresses (22), and an attachment piece (23),
wherein
- the tower segments (21) are arranged one upon the other from the base (25) of the tower (20) to the top (26) of the tower (20),
- the attachment piece (23) is arranged between the first tower segment (211) and the second tower segment (212),
- the buttresses (22) are attached to the attachment piece (23), such that loads which are acting on the tower segments (21) are partially carried by the buttresses (22).

2. Tower (20) according to claim 1,
wherein a buttress (22) is attached to the attachment piece (23) via a mounting flange.

3. Tower (20) according to one of the preceding claims,
wherein the attachment piece (23) is made of cast steel.

4. Tower (20) according to one of the preceding claims,
wherein at least some of the tower segments (21) are made of steel.

5. Tower (20) according to one of the preceding claims,
wherein the buttresses (22) are made of steel, in particular spiral welded steel.

6. Tower (20) according to one of the preceding claims,
wherein the outer diameters (33) of the tower segments (21) are substantially equal along the whole extension of the tower from the base (25) of the tower (20) until the top (26) of the tower (20).

7. Tower (20) according to one of the preceding claims,
wherein the thickness (35) of the walls of the tower segments (21) decrease from the base (25) of the tower (20) until the top (26) of the tower (20).

8. Tower (20) according to one of the preceding claims,
wherein the attachment piece (23) is segmented into a plurality of attachment piece segments (24).

9. Tower (20) according to one of the preceding claims, wherein
- the number of attachment piece segments (24) equals the number of buttresses (22), and
- one buttress (22) is attached to each attachment piece segment (24).

10. Tower (20) according to one of the preceding claims,
wherein all attachment piece segments (24) have substantially the same shape and size.

11. Tower (20) according to one of the preceding claims,
wherein the tower (20) comprises a bracing between two adjacent buttresses (22) and/or between a buttress (22) and a tower segment (21) such that the load carrying capability of the buttresses (22) and the stability of the entire tower (20) is further increased.

12. Tower (20) according to one of the preceding claims,
wherein the entire height (27) of the tower (20) after erection as measured from the base (25) of the tower (20) until the top (26) of the tower (20) exceeds fifty meters, in particular exceeds seventy-five meters, even more particularly exceeds one hundred meters.

13. Tower (20) according to one of the preceding claims,
wherein the angle (36) between the longitudinal axis (221) of a buttress (22) and the longitudinal axis (231) of the attachment piece (23) is smaller than forty-five degrees, in particular smaller than thirty degrees, even more particularly smaller than fifteen degrees.

14. Tower (20) according to one of the preceding claims,
wherein the attachment piece (23) is located at a height between twenty per cent and eighty per cent of the entire height (27) of the tower (20), in particular between thirty per cent and seventy per cent of the entire height (27) of the tower (20).

15. Wind turbine (10) for generating electricity comprising a tower (20) according to one of the preceding claims.
